(19) Europäisches Patentamt
European Patent Office
Office européen des brevets

(11) EP 3 357 278 B1

(12) EUROPEAN PATENT SPECIFICATION

(45) Date of publication and mention
of the grant of the patent:
06.11.2019 Bulletin 2019/45

(51) Int Cl.:
H04W 48/16 (2009.01)          H04J 11/00 (2006.01)
H04W 4/70 (2018.01)           H04B 1/7083 (2011.01)

(21) Application number: 16784289.7

(22) Date of filing: 30.09.2016

(86) International application number:
PCT/SE2016/050935

(87) International publication number:
WO 2017/058096 (06.04.2017 Gazette 2017/14)

(54) NARROWBAND CARRIER SEARCHING

SCHMALBANDTRÄGERSUCHE

RECHERCHE POUR PORTEUSE DE BANDE ÉTROITE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 02.10.2015 US 201562236739 P

(43) Date of publication of application:
08.08.2018 Bulletin 2018/32

(73) Proprietor: Telefonaktiebolaget LM Ericsson
(PUBL)
164 83 Stockholm (SE)

(72) Inventors:
• WANG, Yi-Pin Eric
Fremont, California 94539 (US)
• LIN, Xingqin
Santa Clara 95054 (US)
• ADHIKARY, Ansuman
HYDERABAD 500081 (IN)
• SUI, Yutao
SE-171 67 Solna (SE)
• GRÖVLEN, Asbjörn
SE-112 15 Stockholm (SE)
• JOHANSSON, Niklas
SE-753 29 Uppsala (SE)

(74) Representative: Zacco Sweden AB
Valhallavägen 117
Box 5581
114 85 Stockholm (SE)

(56) References cited:
US-A1- 2005 079 870     US-A1- 2013 301 552
US-A1- 2014 036 820     US-A1- 2014 038 587

• ERICSSON ET AL: "NB LTE - Concept Description
L1", 3GPP DRAFT; RP-151397 - NB-LTE -
CONCEPT DESCRIPTION L1, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. TSG RAN, no. Phoenix,
Arizona, USA; 20150914 - 20150916 8 September
2015 (2015-09-08), XP051039282, Retrieved from
the Internet:
URL:http://www.3gpp.org/ftp/Meetings_3GPP_
SYNC/RAN/Docs/ [retrieved on 2015-09-08]
• INTEL CORPORATION: "Handling of DC offset for
NB-IoT Downlink", 3GPP DRAFT; R1-155855 -
INTEL DC_OFFSET, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Malmö,
Sweden; 20151005 - 20151009 30 September 2015
(2015-09-30), XP051021911, Retrieved from the
Internet:
URL:http://www.3gpp.org/ftp/tsg_ran/WG1_RL
1/TSGR1_82b/Docs/ [retrieved on 2015-09-30]

## Description

## BACKGROUND

Members of the 3rd Generation Partnership Project (3GPP) have agreed to define specifications for what is being called "NB-IoT," which refers to a "narrowband Internet of things." These standards will support wireless communications for low-power equipment that may rely on batteries and that will typically send and receive only small amounts of information. Example applications for wireless devices that support NB-IoT include providing parking meters, industrials sensors, and the like with wireless communication capabilities.

The radio interface for NB-IoT will be designed so that a NB-IoT carrier can readily be deployed by operators in or adjacent to portions of their existing wideband spectrum, such as their existing Long Term Evolution (LTE) spectrum. Thus, it is expected that certain aspects of the NB-IoT will be defined to make the most possible use of existing LTE hardware, designs, and procedures. However, changes to the LTE specifications are likely to be made at all levels of the specifications, to reduce power consumption, improve coverage, and otherwise provide for improved operation of low-power wireless equipment. Other deployments are possible, though, including a standalone deployment whereby the NB-IoT carrier is deployed in dedicated spectrum, such as a refarmed GSM band. The type of deployment may not be known a priori to a narrowband receiver searching for a NB-IoT carrier.

In this and other contexts, challenges exist in searching for a narrowband carrier within a frequency spectrum, especially in a low-power and low-cost manner.

US2014036820, depicts a base station receiving uplink data transmitted from mobile terminals of first type and mobile terminals of second type over a radio interface using plural subcarriers. The mobile terminals of first type transmit uplink data on a first group of the sub-carriers over a first bandwidth and the mobile terminals of second type transmit uplink data on a second group of the sub-carriers within the first group of sub-carriers over a second bandwidth that is smaller than the first bandwidth. The base station is configured to grant uplink radio resources in response to random access request messages transmitted by mobile terminals of first type transmitted on a first random access channel and to grant uplink radio resources in response to random access request messages transmitted by mobile terminals of second type transmitted on a second random access channel, which are transmitted on sub-carriers within the second group of sub-carriers.

US2013301552, depicts methods and apparatus providing MTC in a wireless network. In an aspect, a narrow bandwidth within a wide system bandwidth is allocated for communicating data related to MTC. MTC control data generated for communicating over one or more MTC control channels for an MTC UE within the narrow bandwidth is transmitted over the one or more MTC control channels. The one or more MTC channels are multiplexed with one or more legacy channels over the wide system bandwidth. Other aspects are provided for transmission mode and content of the MTC control data or other MTC data

ERICSSON ET AL, "NB LTE - Concept Description L1", vol. TSG RAN, no. Phoenix, Arizona, USA; 20150914 - 20150916, (20150908), 3GPP DRAFT; RP-151397 - NB-LTE - CONCEPT DESCRIPTION L1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN/Docs/, (20150908), depicts deployment options and channel searches including using a refarmed GSM carrier in the LTE guard band adjacent to an LTE carrier by allocating one PRB to operate NB-LTE.

INTEL CORPORATION, "Handling of DC offset for NB-IoT Downlink", vol. RAN WG1, no. Malmo, Sweden; 20151005 - 20151009, (20150930), 3GPP DRAFT; R1-155855 - INTEL DC_OFFSET, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg_ran/WG1_RL1/TSGR1_82b/Docs/, (20150930), XP051021911, depicts a method of Handling of DC offset for NB-IoT Downlink

US2005079870 illustrates a method wherein, upon power on, a terminal performs cell selection, finds the most suitable cell to receive communication service, and camps on this cell (the serving cell). The terminal thereafter performs "C2-based" cell reselection if a better cell is found, "non-C2 based" cell reselection if the current serving cell cannot be camped on, "power scan" cell reselection if the C2-based or non-C2 based cell reselection fails, and cell selection if the power scan cell reselection fails. For the power scan cell reselection, the terminal initially performs a power scan and obtains received signal strength measurements for a list of RF channels. This list includes fewer than all RF channels evaluated by the cell selection. The terminal then acquires and decodes the N strongest RF channels, preferably in parallel, to find a suitable cell.; The terminal selects a suitable cell, if found, with the highest C2 value as the new serving cell from which to receive service.

## SUMMARY

The invention is defined by the independent claims; embodiments are set forth in the dependent claims, in the following description and in the drawings.

One or more embodiments herein include a method implemented by a narrowband receiver for searching among different possible narrowband allocations for a narrowband carrier having a specific characteristic. The method comprises searching a wideband frequency grid for a narrowband portion of a wideband carrier that the narrowband carrier is permitted to lie in-band with or adjacent to, to obtain one or more candidate wideband gridpoints.

Embodiments herein also include receiver, as well as a radio node (e.g., a base station or a wireless communication device such as a machine-to-machine device) that comprises such a receiver.

Embodiments herein further include a computer program comprising instructions which, when executed by at least one processor of a receiver, causes the receiver to carry out the method as described above.

Embodiments finally include a computer program product containing such a computer program.

## BRIEF DESCRIPTION OF THE DRAWINGS

Figure 1 is a block diagram of a radio node that includes a narrowband receiver according to some embodiments.
Figure 2 is a logic flow diagram of a method performed by a narrowband receiver according to some embodiments.
Figure 3 is a block diagram of a frequency domain searched by a narrowband receiver according to one or more embodiments.
Figure 4 is a block diagram of a frequency domain with a narrowband frequency grid that has a finer resolution than a wideband frequency grid according to some embodiments.
Figure 5 is a block diagram of a frequency domain with a narrowband frequency grid that has a coarser resolution than a wideband frequency grid according to some embodiments.
Figure 6 is a logic flow diagram of a method performed by a narrowband receiver according to one or more other embodiments.
Figure 7 is a block diagram of a radio node according to some embodiments.
Figure 7 A is a block diagram of a user equipment according to some embodiments.
Figure 8 is a block diagram of a base station and wireless device, either or both of which may include a narrowband receiver according to some embodiments.

## DETAILED DESCRIPTION

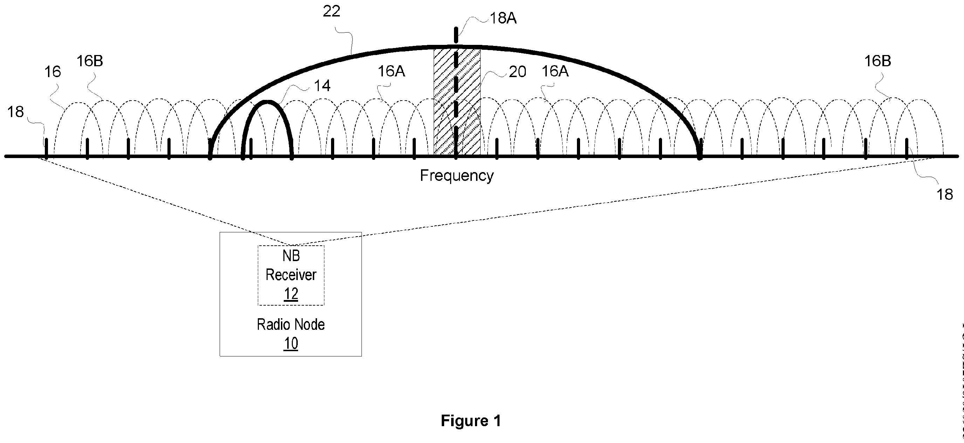

Figure 1 illustrates a radio node 10 that includes a narrowband receiver 12 (e.g., a narrowband LTE or IoT receiver) configured according to one or more embodiments. The radio node 10 may be a user equipment. The receiver 12 is configured to search the frequency domain for a narrowband carrier 14 having a specific characteristic (e.g., one of different possible synchronization signal sequences). There are multiple different possible narrowband allocations 16 in the frequency domain where the narrowband carrier 16 could be allocated. For example, in some embodiments where the receiver 12 is a narrowband LTE or IoT receiver, the different possible narrowband allocations 16 are approximately 180 kHz frequency allocations (corresponding to one LTE physical resource block) spaced along the frequency domain (e.g., in a grid) every 20 kHz. Challenges exist in searching these different possible narrowband allocations 16 for a narrowband carrier 14, especially in a low-power and low-cost manner.

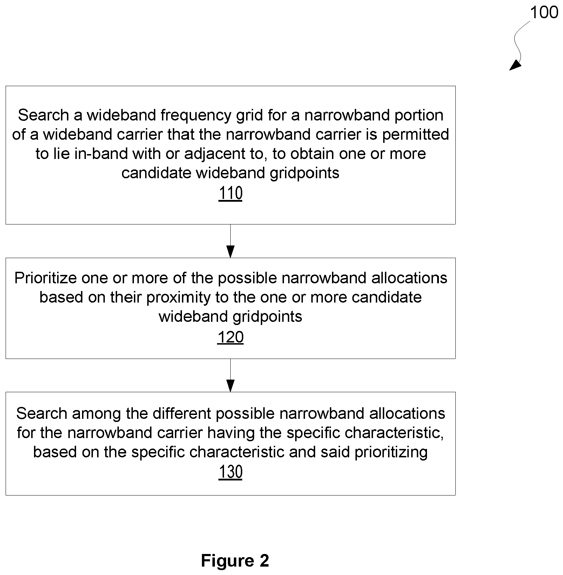

Figure 2 illustrates processing 100 performed by the receiver 12 for searching among the different possible narrowband allocations 16 for a narrowband carrier according to some embodiments. As shown, the receiver 12 searches a wideband frequency grid 18 for a narrowband portion 20 of a wideband carrier 22 that the narrowband carrier 16 is permitted to lie in-band with or adjacent to, to obtain one or more candidate wideband gridpoints 18A (Block 110). The receiver 12 prioritizes one or more of the possible narrowband allocations 16 based on their proximity to the one or more candidate wideband gridpoints 18 (Block 120). For instance, the receiver 12 may prioritize at least some of the possible narrowband allocations differently based on those allocations having different proximities to the one or more candidate wideband gridpoints. For example, the receiver 12 may rank one or more of the possible narrowband allocations 16 in a priority order, with allocations more likely to include the narrowband carrier 14 ranked with a higher priority than allocations less likely to include the narrowband carrier 14. Regardless, the receiver 12 then searches among the different possible narrowband allocations 16 for the narrowband carrier 14 having the specific characteristic, based on the specific characteristic and the prioritization (Block 130). In some embodiments, for example, the receiver 12 searches the narrowband allocations 16 in a priority order, based on the proximity of those allocations to the one or more candidate gridpoints 18, e.g., so as to search at least some allocations that are closer in proximity to a candidate wideband gridpoint before searching at least some other allocations that are farther away in proximity to a candidate wideband gridpoint.

In one or more embodiments, the narrowband portion of a wideband carrier 22 for which the receiver searches is simply *any* portion of the wideband carrier, whether located in the center or otherwise of the carrier. The wideband search therefore effectively amounts to a coarse search for the existence of a wideband carrier. The receiver 12 may for instance search for any narrowband portion that has an energy profile characteristic of such a wideband carrier (e.g., by spotting LTE physical resource blocks that stand out from an energy perspective, e.g., due to PRB boosting). Regardless, exploiting the possibility that the narrowband carrier is deployed inband or adjacent to such a wideband carrier, the receiver 12 focuses its search around the general location of where a portion of a wideband carrier is found. The receiver 12 may for instance prioritize narrowband allocations located close to the general location of where a wideband carrier is found.

By contrast, in the one or more embodiments shown in Figure 1, the narrowband portion 20 of a wideband carrier 22 for which the receiver searches is the wideband carrier's center portion 20. In at least some embodiments, for example, the receiver 12 identifies the wideband carrier's center portion 20 based on the wideband carrier 22 having a known energy signature or profile at its center. In one embodiment, for instance, the receiver 12 searches for a narrowband center portion 20 that has a null at its center (i.e., a DC or null frequency or subcarrier).

Regardless, in such embodiments where the receiver searches for the wideband carrier's center portion 20, a wideband carrier's center frequency is aligned to one of the wideband gridpoints of the wideband frequency grid. For example, where the wideband carrier 20 is a carrier of an LTE system or a system that evolves from LTE, the wideband gridpoints of the receiver's wideband search grid 18 are spaced approximately 100 kHz apart and each LTE carrier is centered on one of these gridpoints. The one or more candidate wideband gridpoints 18A that the receiver 12 identifies in these embodiments are candidates for the center of such a wideband carrier 20. Accordingly, the receiver 12 effectively prioritizes one or more of the possible narrowband allocations 16 based on their proximity to a candidate for the center frequency of a wideband carrier that the narrowband carrier is permitted to lie in-band with or adjacent to. The receiver 12 may for instance prioritize searching at least some narrowband allocations 16A that are closer in proximity to a candidate for the wideband carrier's center 18A before searching at least some other narrowband allocations 16B that are farther away in proximity to a candidate for the wideband carrier's center 18A. In at least one embodiment, the receiver 12 searches contiguous or non-contiguous narrowband allocations 16 surrounding the candidate for the wideband carrier's center 18A in a priority order that emanates outwardly from that center 18A.

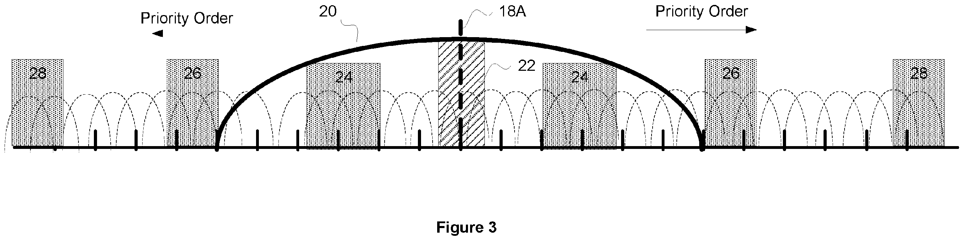

Figure 3 illustrates one exemplary scheme for performing a non-contiguous priority order search emanating outwardly from a candidate for a wideband carrier's center 18A. As shown, the receiver 12 searching at least some possible narrowband allocations 24 that are closer in proximity to the one or more candidate wideband gridpoints 18A before searching at least some other possible narrowband allocations 26, 28 that are farther away in proximity to the one or more candidate wideband gridpoints 18A. In particular, the receiver 12 first searches possible narrowband allocations within block 24 that would lie in-band of a wideband carrier 20 with an assumed bandwidth (e.g., of 10 MHz) and that have a proximity between an inner threshold and an outer threshold (represented by the bounds of frequency block 24).

If this search does not confidently reveal the narrowband carrier, the receiver 12 then searches possible narrowband allocations within block 26 that have a proximity greater than a first assumed wideband edge threshold (represented here by the bandwidth of carrier 20), such that those allocations would lie adjacent to a wideband carrier 20 with the same or a different assumed bandwidth. That is, after failing to find the narrowband carrier within the most likely candidates for an in-band deployment, the receiver 12 skips over at searching at least some allocations between blocks 24 and 26 so as to search in a non-contiguous order, based on an assumption that the narrowband carrier instead lies adjacent to the wideband carrier 20 (e.g., within a guardband of the carrier 20).

Of course, the assumption about where to look in the frequency domain for the narrowband carrier at the edge of the wideband carrier must be coupled with an assumption about the bandwidth of the wideband carrier. In at least some embodiments, the receiver 12 performs successive searches based on different assumed bandwidths for the wideband carrier 20. For example, after failing to find the narrowband carrier within blocks 26, the receiver 12 may next perform a non-contiguous search based on assuming a different bandwidth for the wideband carrier 20. For instance, the receiver 12 searches possible narrowband allocations within blocks 28 that have a proximity greater than a second assumed wideband edge threshold such that those allocations would lie adjacent to a wideband carrier with a greater assumed bandwidth. In one or more embodiments, the receiver 12 likewise prioritizes the different possible bandwidths for the wideband carrier 20 (e.g., based on a likelihood of their being deployed, perhaps as informed by the receiver's location or other configuration). Armed with this bandwidth prioritization, the receiver 12 performs the successive searches with different assumed bandwidths, in the priority bandwidth order.

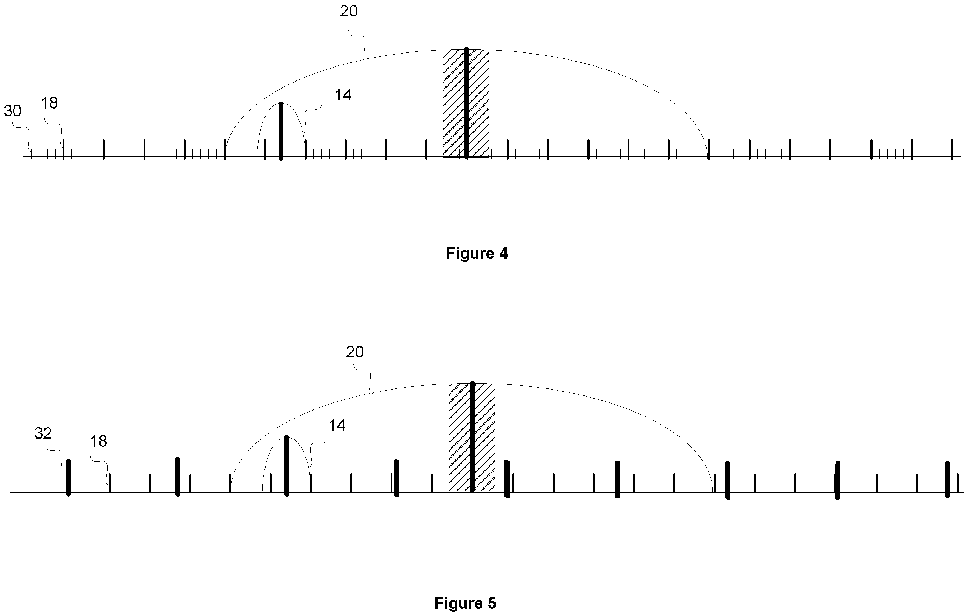

In at least some embodiments, the different possible narrowband allocations 16 comprise narrowband allocations centered on different possible narrowband gridpoints of a narrowband frequency grid that overlaps in frequency with the wideband frequency grid. Figures 4 and 5 illustrate different embodiments in this regard. Figure 4 illustrates an embodiment where the receiver 12 employs a narrowband search grid (with narrowband gridpoints 30) that has a finer resolution (e.g., 20 kHz) than the wideband frequency grid (e.g., 100 kHz). Figure 5 by contrast illustrates an embodiment where the receiver 12 employs a narrowband search grid (with narrowband gridpoints 32) that has a coarser resolution (e.g., 180 kHz) than the wideband frequency grid (e.g., 100 kHz).

In at least some embodiments, the receiver 12 dynamically adapts its narrowband search grid to have a different resolution. For example, in one embodiment, the receiver 12 upon finding a center frequency 18A of a wideband carrier 20, searches for the narrowband carrier using a coarser resolution search grid. In one NB-IoT embodiment, for instance, the receiver 12 uses a 180 kHz search grid for the narrowband carrier, and a 100 kHz search grid for the wideband carrier. Alternatively, the receiver 12 may use a 900 kHz search grid for the narrowband carrier (which is the least common multiple of the 180 kHz narrowband allocation resolution and the LTE 100 kHz search grid), while using a 100 kHz search grid for the wideband carrier. In any case, a subset of the narrowband grid points may align with the wideband gridpoints.

In one or more embodiments, the receiver 12 advantageously exploits the finding of both the wideband and narrowband carrier's centers to determine a phase of a wideband reference signal transmitted on the wideband carrier (e.g., a wideband cell-specific reference signal in LTE-based embodiments). That is, upon finding the narrowband carrier with the specific characteristic, the receiver 12 determines a phase of a wideband reference signal transmitted on the wideband carrier, based on a frequency distance between the center of the narrowband carrier and the center of the wideband carrier that the narrowband carrier is in-band with or adjacent to.

In one or more LTE-based embodiments, for example, the reference signal sequence is a cell-specific reference signal sequence described in 3GPP TS 36.211 v12.7.0 sections 6.10.1.1 and 6.10.1.2:
The reference-signal sequence $r_{l,n_s}(m)$ is defined by

$$r_{l,n_s}(m) = \frac{1}{\sqrt{2}}\big(1 - 2 \cdot c(2m)\big) + j\frac{1}{\sqrt{2}}\big(1 - 2 \cdot c(2m+1)\big), \quad m = 0,1,\ldots,2N_{\text{RB}}^{\text{max,DL}} - 1 \tag{1}$$

where $n_s$ is the slot number within a radio frame and $l$ is the OFDM symbol number within the slot. The pseudo-random sequence $c(i)$ is defined in clause 7.2. The pseudo-random sequence generator shall be initialised with

$c_{\text{init}} = 2^{10} \cdot \big(7 \cdot (n_s + 1) + l + 1\big) \cdot \big(2 \cdot N_{\text{ID}}^{\text{cell}} + 1\big) + 2 \cdot N_{\text{ID}}^{\text{cell}} + N_{\text{CP}}$ at the start of each OFDM symbol where $N_{ID}^{cell}$ is the cell identity number and

$$N_{\text{CP}} = \begin{cases} 1 & \text{for normal CP} \\ 0 & \text{for extended CP} \end{cases}.$$

The reference signal sequence $r_{l,n_s}(m)$ shall be mapped to complex-valued modulation symbols $a_{k,l}^{(p)}$ used as reference symbols for antenna port $p$ in slot $n_s$ according to

$$a_{k,l}^{(p)} = r_{l,n_s}(m')$$

where

$$k = 6m + (v + v_{\text{shift}})\bmod 6$$
$$l = \begin{cases} 0, N_{\text{symb}}^{\text{DL}} - 3 & \text{if } p \in \{0,1\} \\ 1 & \text{if } p \in \{2,3\} \end{cases}$$
$$m = 0,1,\ldots,2 \cdot N_{\text{RB}}^{\text{DL}} - 1$$
$$m' = m + N_{\text{RB}}^{\text{max,DL}} - N_{\text{RB}}^{\text{DL}}$$

The variables $v$ and $v_{\text{shift}}$ define the position in the frequency domain for the different reference signals where $v$ is given by

$$v = \begin{cases} 0 & \text{if } p = 0 \text{ and } l = 0 \\ 3 & \text{if } p = 0 \text{ and } l \neq 0 \\ 3 & \text{if } p = 1 \text{ and } l = 0 \\ 0 & \text{if } p = 1 \text{ and } l \neq 0 \\ 3(n_s \bmod 2) & \text{if } p = 2 \\ 3 + 3(n_s \bmod 2) & \text{if } p = 3 \end{cases}$$

The cell-specific frequency shift is given by $v_{\text{shift}} = N_{\text{ID}}^{\text{cell}} \bmod 6$ .

For each PRB, there are two resource elements allocated to CRS for an antenna port on certain OFDM symbols.

PRB0, m=0 and m=1;
PRB1, m=2 and m=3;

Thus PRB number can be related to m index by m=2*PRB+j, j=0 or 1.

The m' values are obtained using the m to m' conversion expression above. Thus for each PRB the m' values are used to get the CRS code phase according to equation (1).

The m to m' conversion expression above may be rewritten as m' = m + N_max - N (some subscripts and superscripts are omitted here)
Note that N_max is the maximum number of PRBs allowed by LTE, which is known to all UEs and N is the number of PRB in the specific LTE carrier which is unknown to the UE.

N is related to the middle PRB number denoted by D (which has the DC subcarrier) by N=2*D

m' = m + N_max - N = 2PRB+j + N_max – 2D = 2(PRB-D) + N_max.

Thus by knowing the PRB-D value, which is the offset of the NB-LTE PRB to the PRB with DC, the receiver 12 can figure out m', the CRS code phase.

In one or more embodiments, the receiver 12 demodulates a broadcast channel (e.g., a physical broadcast channel PBCH) that is transmitted on the narrowband carrier and that includes system information, based on the determined phase of the wideband reference signal. This proves advantageous in that unique reference signals need not be used for demodulating such a broadcast channel. Moreover, the broadcast channel's system information (e.g., master information block, MIB) need not convey the frequency distance (i.e., offset) between the center of the narrowband carrier (e.g., NB IoT PRB) and the center of the wideband carrier that the narrowband carrier is in-band with or adjacent to. Indeed, in one or more embodiments, the system information includes information regarding a system frame number for the narrowband carrier but excludes information indicating the frequency distance between the center of the narrowband carrier and the center of the wideband carrier that the narrowband carrier is in-band with or adjacent to.

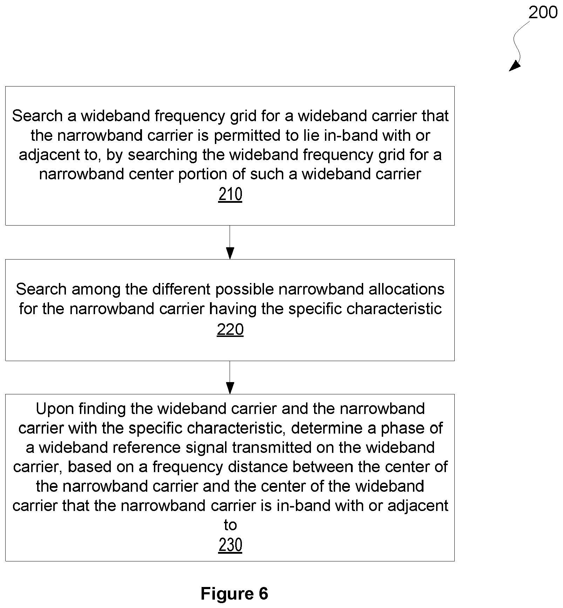

As an alternative or addition to embodiments above, a narrowband receiver may be configured to perform processing as shown in Figure 6. As shown, the receiver 12 searches a wideband frequency grid for a wideband carrier that the narrowband carrier is permitted to lie in-band with or adjacent to, by searching the wideband frequency grid for a narrowband center portion of such a wideband carrier (Block 210). The receiver 12 further searches among the different possible narrowband allocations for the narrowband carrier having the specific characteristic (Block 220). In one or more embodiments, the receiver 12 need not necessarily prioritize the narrowband allocations as described above based on proximity to the wideband carrier's center portion. No matter how the narrowband carrier is found, therefore, the receiver 12 upon finding the wideband carrier and the narrowband carrier with the specific characteristic, determines a phase of a wideband reference signal transmitted on the wideband carrier, based on a frequency distance between the center of the narrowband carrier and the center of the wideband carrier that the narrowband carrier is in-band with or adjacent to (Block 130).

Similarly as explained above, the receiver may demodulate a broadcast channel that is transmitted on the narrowband carrier and that includes system information, based on the determined phase of the wideband reference signal. In at least one embodiment, the system information includes information regarding a system frame number for the narrowband carrier but excludes information indicating the frequency distance between the center of the narrowband carrier and the center of the wideband carrier that the narrowband carrier is in-band with or adjacent to.

In one or more embodiments, the specific characteristic comprises transmission of a set of one or more different possible known signal sequences, and searching comprises correlating a signal received in an allocation with the different possible known signal sequences to identify within which narrowband allocation said set of one or more signal sequences is transmitted. In one such embodiment, the different possible known signal sequences comprise one or more Constant Amplitude Zero Auto-Correlation (CAZAC) sequences. Alternatively or additionally, the different possible known signal sequences comprise one or more synchronization signal sequences (e.g., PSS and/or SSS in LTE-based embodiments).

In at least some embodiments, the receiver 12 is a direct-conversion receiver. A direct-conversion receiver (DCR), also known as a zero-IF or homodyne receiver, directly translates a received signal from a carrier frequency down towards baseband, without first translating to an intermediate frequency (IF) (i.e., in a single step). The simplicity of a DCR's architecture proves advantageous for numerous reasons. First, a DCR need not have bulky, off-chip, front-end image-reject filters, which are required in conventional super-heterodyne receivers that must reject signal images. Second, with the desired spectrum down-converted directly towards baseband, a DCR can perform channel selection with a simple analog low-pass filter or with digital-signal processing (DSP) after analog-to-digital conversion (ADC). Filtering at baseband means device parasitics are less severe, and less current is needed for amplification. Consequently, DCRs prove promising for low-cost and low-power applications.

In at least some embodiments, the receiver 10 is comprised within a radio node (e.g., a wireless communication device or a base station). In one or more embodiments, this radio node operates according to narrowband Internet of Things (NB-IoT) specifications.

In this regard, embodiments described herein are explained in the context of operating in or in association with a RAN that communicates over radio communication channels with wireless communication devices, also interchangeably referred to as wireless terminals or UEs, using a particular radio access technology. More specifically, embodiments are described in the context of the development of specifications for NB-IoT, particularly as it relates to the development of specifications for NB-IoT operation in spectrum and/or using equipment currently used by E-UTRAN, sometimes referred to as the Evolved UMTS Terrestrial Radio Access Network and widely known as the LTE system. However, it will be appreciated that the techniques may be applied to other wireless networks, as well as to successors of the E-UTRAN. Thus, references herein to signals using terminology from the 3GPP standards for LTE should be understood to apply more generally to signals having similar characteristics and/or purposes, in other networks.

A radio node, as described herein, can be any type of node capable of communicating with another node over radio signals. In the context of the present disclosure, it should be understood that a radio node may be a wireless device or a radio network node (e.g., a base station). A wireless device may refer to a machine-to-machine (M2M) device, a machine-type communications (MTC) device, and/or a NB-IoT device. The wireless device may also be a UE, however it should be noted that the UE does not necessarily have a "user" in the sense of an individual person owning and/or operating the device. A wireless device may also be referred to as a radio device, a radio communication device, a wireless terminal, or simply a terminal - unless the context indicates otherwise, the use of any of these terms is intended to include device-to-device UEs or devices, machine-type devices or devices capable of machine-to-machine communication, sensors equipped with a wireless device, wireless-enabled table computers, mobile terminals, smart phones, laptop-embedded equipped (LEE), laptop-mounted equipment (LME), USB dongles, wireless customer-premises equipment (CPE), etc. In the discussion herein, the terms machine-to-machine (M2M) device, machine-type communication (MTC) device, wireless sensor, and sensor may also be used. It should be understood that these devices may be UEs, but are generally configured to transmit and/or receive data without direct human interaction.

In an IOT scenario, a wireless device as described herein may be, or may be comprised in, a machine or device that performs monitoring or measurements, and transmits the results of such monitoring measurements to another device or a network. Particular examples of such machines are power meters, industrial machinery, or home or personal appliances, e.g. refrigerators, televisions, personal wearables such as watches etc. In other scenarios, a wireless device as described herein may be comprised in a vehicle and may perform monitoring and/or reporting of the vehicle's operational status or other functions associated with the vehicle.

In view of the above modifications and variations, those skilled in the art will appreciate that the receiver 12 illustrated in Figure 1 may be configured to perform as described above by implementing any functional means or units. In one embodiment, for example, the receiver comprises respective circuits configured to perform the respective steps shown in Figures 2 and/or 6. The circuits in this regard may comprise circuits dedicated to performing certain functional processing and/or one or more microprocessors in conjunction with memory. In embodiments that employ memory, which may comprise one or several types of memory such as read-only memory (ROM), random-access memory, cache memory, flash memory devices, optical storage devices, etc., the memory stores program code that, when executed by the one or more for carrying out one or more microprocessors, carries out the techniques described herein.

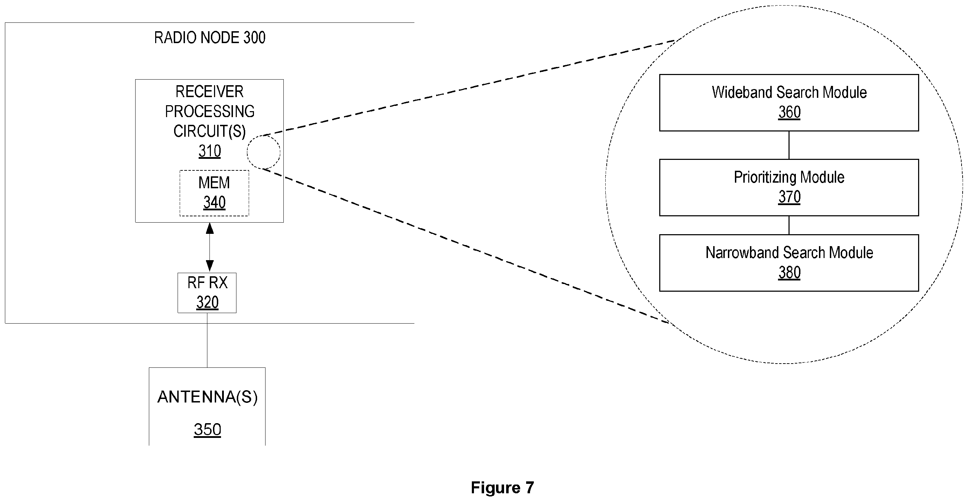

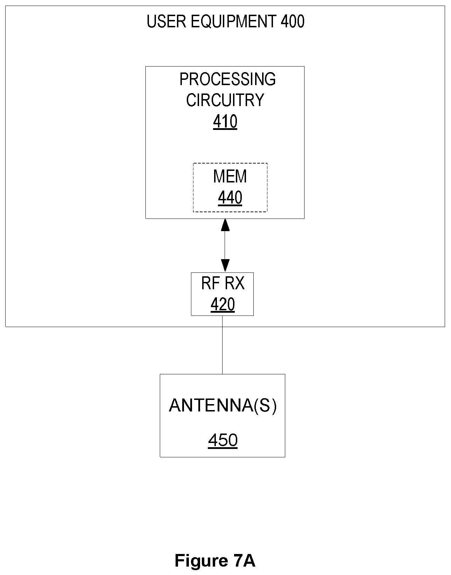

Embodiments herein also include a corresponding radio node that comprises receiver 12. Figure 7 illustrates additional details of a radio node 300 in accordance with one or more embodiments. The radio node 300 is configured, e.g., via any functional means or units, to implement the receiver processing described above.

In at least some embodiments, the radio node 300 comprises one or more receiver processing circuit(s) 310 configured to implement the above processing, such as by implementing functional means or units (e.g., shown as a wideband search module 360, a prioritizing module 370, and a narrowband search module 380 configured to implement respective processing shown in Figure 2). In one embodiment, for example, the receiver processing circuit(s) 310 implement functional means or units as respective circuits. The circuits in this regard may comprise circuits dedicated to performing certain functional processing and/or one or more microprocessors in conjunction with memory. In embodiments that employ memory 340, which may comprise one or several types of memory such as read-only memory (ROM), random-access memory, cache memory, flash memory devices, optical storage devices, etc., the memory stores program code that, when executed by the one or more for carrying out one or more microprocessors, carries out the techniques described herein. The radio node 300 in at least some embodiments further comprises an RF RX 320 configured to receive the received signal via one or more associated antennas 350.

Embodiments herein also include a corresponding user equipment (UE) that comprises receiver 12. Figure 7A illustrates additional details of a user equipment 400 in accordance with one or more embodiments. The user equipment 400 is configured, e.g., via any functional means or units, to implement the methods described above.

In at least some embodiments, the user equipment 400 comprises processing circuitry 410 configured to implement the processing described above. In some examples, the narrowband receiver 12 described above may thus be implemented using processing circuitry 410. The circuitry in this regard may be circuitry dedicated to performing the above processing (e.g. an ASIC) and/or may comprise one or more microprocessors in conjunction with memory. In embodiments that employ memory 440, which may comprise one or several types of memory such as read-only memory (ROM), random-access memory, cache memory, flash memory devices, optical storage devices, etc., the memory stores program code that, when executed by the one or more for carrying out one or more microprocessors, carries out the techniques described herein. The user equipment 400 in at least some embodiments further comprises an RF RX 420 configured to receive the received signal via one or more associated antennas 450.

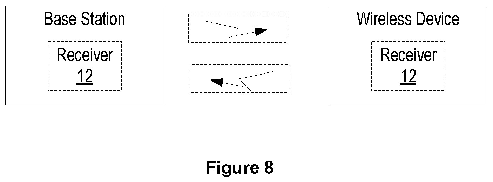

As shown in Figure 8, in one embodiment, a radio node in the form of a wireless communication device (e.g., an M2M device) includes an embodiment of the receiver 12 as taught herein, for processing downlink signals transmitted by a base station. Additionally or alternatively, the base station includes an embodiment of the receiver 12 as taught herein, for processing uplink signals transmitted by the device, which may or may not be the same as the downlink channel.

Those skilled in the art will also appreciate that embodiments herein further include corresponding computer programs.

A computer program comprises instructions which, when executed on at least one processor of a mesh node, cause the node to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

## Claims

1. A method implemented by a user equipment (400) comprising a narrowband receiver (12) for searching among different possible narrowband allocations (16) for a narrowband carrier (14) having a specific characteristic, the method comprising:

   searching (110) a wideband frequency grid for a narrowband portion (22) of a wideband carrier (20) that the narrowband carrier (14) is permitted to lie in-band with or adjacent to, to obtain one or more candidate wideband gridpoints (18);
   the method being **characterized by** further comprising:

   prioritizing (120) one or more of the possible narrowband allocations (16) based on their proximity to the one or more candidate wideband gridpoints (18); and
   searching (130) among the different possible narrowband allocations (16) for the narrowband carrier (14) having the specific characteristic, based on the specific characteristic and said prioritizing, and

   wherein the searching (110) a wideband frequency grid for a narrowband portion (22) of a wideband carrier (20) comprises searching for a center portion of the wideband carrier (20) and identifying the center portion of the wideband carrier (20) based on the wideband carrier (20) having a null at its center.

2. The method of claim 1, wherein searching the wideband frequency grid comprises searching for a narrowband center portion of a wideband carrier (20) that the narrowband carrier (14) is permitted to lie in-band with or adjacent to, to obtain one or more candidate wideband gridpoints (18) that are candidates for the center of such a wideband carrier (20).

3. The method of any of claims 1-2, wherein said prioritizing comprises determining a priority order in which to search among the different possible narrowband allocations (16), based on the proximity of those allocations to the one or more candidate wideband gridpoints (18).

4. The method of claim 3, wherein searching according to the priority order comprises searching at least some possible narrowband allocations (16) that are closer in proximity to the one or more candidate wideband gridpoints (18) before searching at least some other possible narrowband allocations (16) that are farther away in proximity to the one or more candidate wideband gridpoints (18).

5. The method of any of claims 3-4, wherein searching according to the priority order comprises first searching possible narrowband allocations (16) that would lie in-band of a wideband carrier (20) with an assumed bandwidth and that have a proximity between an inner threshold and an outer threshold, and then searching possible narrowband allocations (16) that have a proximity greater than a first assumed wideband edge threshold such that those allocations would lie adjacent to a wideband carrier (20) with the same or a different assumed bandwidth.

6. The method of claim 5, wherein searching according to the priority order next comprises searching possible narrowband allocations (16) that have a proximity greater than a second assumed wideband edge threshold.

7. The method of any of claims 1-6, wherein the different possible narrowband allocations (16) comprise narrowband allocations centered on different possible narrowband gridpoints of a narrowband frequency grid that overlaps in frequency with the wideband frequency grid.

8. The method of claim 7, wherein the narrowband frequency grid at least partially aligns with the wideband frequency grid.

9. The method of any of claims 7-8, wherein the narrowband frequency grid has a finer resolution than the wideband frequency grid.

10. The method of any of claims 7-8, wherein the narrowband frequency grid has a coarser resolution than the wideband frequency grid.

11. The method of any of claims 1-10, further comprising, upon finding the narrowband carrier (14) with the specific characteristic, determining a phase of a wideband reference signal transmitted on the wideband carrier (20), based on a frequency distance between the center of the narrowband carrier (14) and the center of the wideband carrier (20) that the narrowband carrier (14) is in-band with or adjacent to.

12. The method of claim 11, further comprising demodulating a broadcast channel that is transmitted on the narrowband carrier (14) and that includes system information, based on the determined phase of the wideband reference signal.

13. The method of claim 12, wherein the system information includes information regarding a system frame number for the narrowband carrier (14) but excludes information indicating the frequency distance between the center of the narrowband carrier (14) and the center of the wideband carrier (20) that the narrowband carrier (14) is in-band with or adjacent to.

14. The method of any of claims 1-13, wherein the narrowband carrier (14) is a narrowband Long Term Evolution (NB-LTE) carrier or narrowband Internet of Things (NB-IoT) carrier.

15. The method of any of claims 1-14, wherein the wideband carrier (20) is an LTE carrier or a carrier that evolves from an LTE carrier.

16. The method of any of claims 1-15, wherein the narrowband receiver (12) is a direct-conversion receiver.

17. The method of any of claims 1-16, wherein the specific characteristic comprises transmission of a set of one or more different possible known signal sequences, and wherein said searching (130) among the different possible narrowband allocations (16) comprises correlating a signal received in an allocation with the different possible known signal sequences to identify within which narrowband allocation said set of one or more signal sequences is transmitted.

18. The method of claim 17, wherein the different possible known signal sequences comprise one or more Constant Amplitude Zero Auto-Correlation (CAZAC) sequences.

19. The method of any of claims 17-18, wherein the different possible known signal sequences comprise one or more synchronization signal sequences.

20. A user equipment (400) comprising a narrowband receiver (12) for searching among different possible narrowband allocations (16) for a narrowband carrier (14) having a specific characteristic, the narrowband receiver (12) configured to:

search a wideband frequency grid for a narrowband portion (22) of a wideband carrier (20) that the narrowband carrier (14) is permitted to lie in-band with or adjacent to, to obtain one or more candidate wideband gridpoints (18);
wherein the narrowband receiver (12) is **characterized by** being further configured to:

prioritize one or more of the possible narrowband allocations (16) based on their proximity to the one or more candidate wideband gridpoints (18);
search among the different possible narrowband allocations (16) for the narrowband carrier (14) having the specific characteristic, based on the specific characteristic and said prioritizing, and
in the search a wideband frequency grid for a narrowband portion (22) of a wideband carrier (20), search for a center portion of the wideband carrier (20) and identify the center portion of the wideband carrier (20) based on the wideband carrier (20) having a null at its center.

21. The user equipment (400) of claim 20, configured to perform the method of any of claims 2-19.

22. A computer program comprising instruction which, when executed by at least one processor of a narrowband receiver (12) comprised in a user equipment (400), causes the narrowband receiver (12) to carry out the method of any of claims 1-19.

23. A computer readable storage medium having stored thereon the computer program of claim 22.


**Patentansprüche**

1. Verfahren, das von einer Benutzereinrichtung (400) implementiert wird, umfassend einen Schmalbandempfänger (12), um unter unterschiedlichen möglichen Schmalbandzuweisungen (16) nach einem Schmalbandträger (14) mit einer spezifischen Charakteristik zu suchen, wobei das Verfahren umfasst:

Durchsuchen (110) eines Breitbandfrequenzgitters nach einem Schmalbandabschnitt (22) eines Breitbandträgers (20), in dessen Band oder benachbart dazu der Schmalbandträger (14) liegen darf, um einen oder mehrere in Frage kommende Breitbandgitterpunkte (18) zu erhalten;
wobei das Verfahren **dadurch gekennzeichnet ist, dass** es ferner umfasst:

Priorisieren (120) einer oder mehrerer der möglichen Schmalbandzuweisungen (16) basierend auf ihrer Nähe zu dem einen oder den mehreren in Frage kommenden Breitbandgitterpunkten (18); und
Durchsuchen (130) der unterschiedlichen möglichen Schmalbandzuweisungen (16) nach dem Schmalbandträger (14), der die spezifische Charakteristik aufweist, basierend auf der spezifischen Charakteristik und dem Priorisieren, und

wobei das Durchsuchen (110) eines Breitbandfrequenzgitters nach einem Schmalbandabschnitt (22) eines Breitbandträgers (20) das Durchsuchen nach einem Mittelabschnitt des Breitbandträgers (20) und das Identifizieren des Mittelabschnitts des Breitbandträgers (20) basierend auf dem Breitbandträger (20) mit einer Null in seiner Mitte umfasst.

2. Verfahren nach Anspruch 1, wobei das Durchsuchen des Breitbandfrequenzgitters das Durchsuchen nach einem Schmalbandmittelabschnitt eines Breitbandträgers (20) umfasst, in dessen Band oder benachbart dazu der Schmalbandträger (14) liegen darf, um einen oder mehrere in Frage kommende Breitbandgitterpunkte (18) zu erhalten, die für die Mitte eines solchen Breitbandträgers (20) in Frage kommen.

3. Verfahren nach einem der Ansprüche 1-2, wobei das Priorisieren das Bestimmen einer Prioritätsreihenfolge umfasst, in der unter den unterschiedlichen möglichen Schmalbandzuweisungen (16) gesucht werden soll, basierend auf der Nähe dieser Zuweisungen zu dem einen oder den mehreren in Frage kommenden Breitbandgitterpunkten (18).

4. Verfahren nach Anspruch 3, wobei das Durchsuchen gemäß der Prioritätsreihenfolge das Durchsuchen mindestens einiger möglicher Schmalbandzuweisungen (16) umfasst, die näher an dem einen oder den mehreren in Frage kommenden Breitbandgitterpunkten (18) sind, bevor mindestens einige andere mögliche Schmalbandzuweisungen (16) gesucht werden, die weiter entfernt in der Nähe des einen oder der mehreren in Frage kommenden Breitbandgitterpunkte (18) sind.

5. Verfahren nach einem der Ansprüche 3-4, wobei das Durchsuchen gemäß der Prioritätsreihenfolge das erste Durchsuchen möglicher Schmalbandzuweisungen (16) umfasst, die im Band eines Breitbandträgers (20) mit einer angenommenen Bandbreite liegen würden und die eine Nähe zwischen einem inneren Schwellenwert und einem äußeren Schwellenwert aufweisen, und dann Durchsuchen möglicher Schmalbandzuweisungen (16), die eine größere Nähe als einen ersten angenommenen Breitbandkantenschwellenwert aufweisen, so dass diese Zuweisungen benachbart eines Breitbandträgers (20) mit der gleichen oder einer unterschiedlichen angenommenen Bandbreite liegen würden.

6. Verfahren nach Anspruch 5, wobei das Durchsuchen gemäß der nächsten Prioritätsreihenfolge das Durchsuchen möglicher Schmalbandzuweisungen (16) umfasst, die eine Nähe aufweisen, die größer als ein zweiter angenommener Breitbandkantenschwellenwert ist.

7. Verfahren nach einem der Ansprüche 1-6, wobei die unterschiedlichen möglichen Schmalbandzuweisungen (16) Schmalbandzuweisungen umfassen, die auf unterschiedlichen möglichen Schmalbandgitterpunkten eines Schmalbandfrequenzgitters zentriert sind, das sich in der Frequenz mit dem Breitbandfrequenzgitter überlappt.

8. Verfahren nach Anspruch 7, wobei das Schmalbandfrequenzgitter mindestens teilweise mit dem Breitbandfrequenzgitter ausgerichtet ist.

9. Verfahren nach einem der Ansprüche 7-8, wobei das Schmalbandfrequenzgitter eine feinere Auflösung als das Breitbandfrequenzgitter aufweist.

10. Verfahren nach einem der Ansprüche 7-8, wobei das Schmalbandfrequenzgitter eine gröbere Auflösung als das Breitbandfrequenzgitter aufweist.

11. Verfahren nach einem der Ansprüche 1-10, ferner umfassend, nach dem Finden des Schmalbandträgers (14) mit der spezifischen Charakteristik, Bestimmen einer Phase eines Breitbandreferenzsignals, das auf dem Breitbandträger (20) übertragen wird, basierend auf einem Frequenzabstand zwischen der Mitte des Schmalbandträgers (14) und der Mitte des Breitbandträgers (20), in dessen Band oder benachbart dazu der Schmalbandträger (14) liegt.

12. Verfahren nach Anspruch 11, ferner umfassend das Demodulieren eines Rundfunkkanals, der auf dem Schmalbandträger (14) übertragen wird und der Systeminformationen basierend auf der bestimmten Phase des Breitbandreferenzsignals einschließt.

13. Verfahren nach Anspruch 12, wobei die Systeminformationen Informationen bezüglich einer Systemrahmennummer für den Schmalbandträger (14) einschließen, aber Informationen ausschließen, die den Frequenzabstand zwischen der Mitte des Schmalbandträgers (14) und der Mitte des Breitbandträgers (20) angeben, in dessen Band oder benachbart dazu der Schmalbandträger (14) ist.

14. Verfahren nach einem der Ansprüche 1-13, wobei der Schmalbandträger (14) ein Schmalband-Long Term Evolution-Träger (NB-LTE-Träger) oder ein Schmalband-Internet of Things-Träger (NB-IoT-Träger) ist.

15. Verfahren nach einem der Ansprüche 1-14, wobei der Breitbandträger (20) ein LTE-Träger oder ein Träger ist, der sich von einem LTE-Träger entwickelt.

16. Verfahren nach einem der Ansprüche 1-15, wobei der Schmalbandempfänger (12) ein Direktumwandlungsempfänger ist.

17. Verfahren nach einem der Ansprüche 1-16, wobei die spezifische Charakteristik die Übertragung eines Satzes von einer oder mehreren unterschiedlichen möglichen bekannten Signalsequenzen umfasst, und wobei das Durchsuchen (130) unter den unterschiedlichen möglichen Schmalbandzuweisungen (16) das Korrelieren eines Signals umfasst, das in einer Zuweisung mit den unterschiedlichen möglichen bekannten Signalsequenzen empfangen wird, um zu identifizieren, innerhalb welcher Schmalbandzuweisung der Satz einer oder mehrerer Signalsequenzen übertragen wird.

18. Verfahren nach Anspruch 17, wobei die unterschiedlichen möglichen bekannten Signalsequenzen eine oder mehrere Constant Amplitude Zero Auto-Correlation-Sequenzen (CAZAC-Sequenzen) umfassen.

19. Verfahren nach einem der Ansprüche 17-18, wobei die unterschiedlichen möglichen bekannten Signalsequenzen eine oder mehrere Synchronisationssignalsequenzen umfassen.

20. Benutzereinrichtung (400), umfassend einen Schmalbandempfänger (12), um die unterschiedlichen möglichen Schmalbandzuweisungen (16) nach einem Schmalbandträger (14) mit einer spezifischen Charakteristik zu durchsuchen, wobei der Schmalbandempfänger (12) konfiguriert ist zum:

Durchsuchen eines Breitbandfrequenzgitters nach einem Schmalbandabschnitt (22) eines Breitbandträgers (20), in dessen Band oder benachbart dazu der Schmalbandträger (14) liegen darf, um einen oder mehrere in Frage kommende Breitbandgitterpunkte (18) zu erhalten;

wobei der Schmalbandempfänger (12) **dadurch gekennzeichnet ist, dass** er ferner konfiguriert ist zum:

Priorisieren einer oder mehrerer der möglichen Schmalbandzuweisungen (16) basierend auf ihrer Nähe zu dem einen oder den mehreren in Frage kommenden Breitbandgitterpunkten (18);

Durchsuchen der unterschiedlichen möglichen Schmalbandzuweisungen (16) nach dem Schmalbandträger (14), der die spezifische Charakteristik aufweist, basierend auf der spezifischen Charakteristik und dem Priorisieren, und

beim Durchsuchen eines Breitbandfrequenzgitters nach einem Schmalbandabschnitt (22) eines Breitbandträgers (20), Durchsuchen nach einem Mittelabschnitt des Breitbandträgers (20) und Identifizieren des Mittelabschnitts des Breitbandträgers (20) basierend auf dem Breitbandträger (20) mit einer Null in seiner Mitte.

21. Benutzereinrichtung (400) nach Anspruch 20, die dazu konfiguriert ist, das Verfahren nach einem der Ansprüche 2-19 durchzuführen.

22. Computerprogramm, das Anweisungen umfasst, die, wenn sie durch mindestens einen Prozessor eines Schmalbandprozessors (12) ausgeführt werden, der in einer Benutzereinrichtung (400) umfasst ist, den Schmalbandempfänger (12) veranlassen, das Verfahren nach einem der Ansprüche 1-19 auszuführen.

23. Computerlesbares Speichermedium, auf dem das Computerprogramm nach Anspruch 22 gespeichert ist.

## Revendications

1. Procédé implémenté par un équipement utilisateur (400) comprenant un récepteur à bande étroite (12) pour rechercher parmi différentes allocations de bande étroite possibles (16) pour une porteuse à bande étroite (14) ayant une caractéristique spécifique, le procédé comprenant :

la recherche (110) dans une grille de fréquence à large bande d'une partie à bande étroite (22) d'une porteuse à large bande (20) dans la bande avec, ou adjacente à, laquelle la porteuse à bande étroite (14) est autorisée à se trouver, pour obtenir un ou plusieurs points de grille à large bande candidats (18) ;

le procédé étant **caractérisé en ce qu'**il comprend en outre :

la priorisation (120) d'une ou plusieurs des allocations de bande étroite possibles (16) sur la base de leur proximité par rapport au ou aux point (s) de grille à large bande candidat(s) (18) ; et

la recherche (130) parmi les différentes allocations de bande étroite possibles (16) de la porteuse à bande étroite (14) ayant la caractéristique spécifique, sur la base de la caractéristique spécifique et de ladite priorisation, et

dans lequel la recherche (110) dans une grille de fréquence à large bande d'une partie à bande étroite (22) d'une porteuse à large bande (20) comprend la recherche d'une partie centrale de la porteuse à large bande (20) et l'identification de la partie centrale de la porteuse à large bande (20) sur la base de la porteuse à large bande (20) ayant une partie nulle au niveau de son centre.

2. Procédé selon la revendication 1, dans lequel la recherche de la grille de fréquence à large bande comprend la recherche d'une partie centrale à bande étroite d'une porteuse à large bande (20) dans la bande avec, ou adjacente à, laquelle la porteuse à bande étroite (14) est autorisée à se trouver, pour obtenir un ou plusieurs points de grille à large bande candidats (18) qui sont des candidats pour le centre d'une telle porteuse à large bande (20).

3. Procédé selon l'une quelconque des revendications 1 ou 2, dans lequel ladite priorisation comprend la détermination d'un ordre de priorité selon lequel il faut rechercher parmi les différentes allocations de bande étroite possibles (16), sur la base de la proximité de ces allocations par rapport au ou aux point(s) de grille à large bande candidat(s) (18).

4. Procédé selon la revendication 3, dans lequel la recherche selon l'ordre de priorité comprend la recherche d'au moins certaines allocations de bande étroite possibles (16) qui sont plus rapprochées en proximité du ou des points de grille à large bande candidats (18) avant de rechercher au moins certaines autres allocations de bande étroite possibles (16) qui sont plus éloignées en proximité du ou des points de grille à large bande candidats (18).

5. Procédé selon l'une quelconque des revendications 3 ou 4, dans lequel la recherche selon l'ordre de priorité comprend d'abord une recherche d'allocations de bande étroite possibles (16) qui se trouveraient dans la bande d'une porteuse à large bande (20) avec une largeur de bande supposée et qui ont une proximité entre un seuil interne et un seuil externe, puis une recherche d'allocations de bande étroite possibles (16) qui ont une proximité supérieure à un premier seuil de bord de largeur bande supposée de telle sorte que ces allocations se trouveraient adjacentes à une porteuse à large bande (20) avec une largeur de bande supposée identique ou différente.

6. Procédé selon la revendication 5, dans lequel la recherche selon l'ordre de priorité comprend ensuite la recherche d'allocations de bande étroite possibles (16) qui ont une proximité supérieure à un deuxième seuil de bord de largeur bande supposée.

7. Procédé selon l'une quelconque des revendications 1 à 6, dans lequel les différentes allocations de bande étroite possibles (16) comprennent des allocations de bande étroite centrées sur différents points de grille à bande étroite possibles d'une grille de fréquence à bande étroite qui chevauche en fréquence la grille de fréquence à large bande.

8. Procédé selon la revendication 7, dans lequel la grille de fréquence à bande étroite s'aligne au moins partiellement sur la grille de fréquence à large bande.

9. Procédé selon l'une quelconque des revendications 7 ou 8, dans lequel la grille de fréquence à bande étroite a une résolution plus fine que la grille de fréquence à large bande.

10. Procédé selon l'une quelconque des revendications 7 ou 8, dans lequel la grille de fréquence à bande étroite a une résolution plus grossière que la grille de fréquence à large bande.

11. Procédé selon l'une quelconque des revendications 1 à 10, comprenant en outre, lors de la découverte de la porteuse à bande étroite (14) avec la caractéristique spécifique, la détermination d'une phase d'un signal de référence à large bande transmis sur la porteuse à large bande (20), sur la base d'un intervalle de fréquence entre le centre de la porteuse à bande étroite (14) et le centre de la porteuse à large bande (20) dans la bande avec, ou adjacente à, laquelle la porteuse à bande étroite (14) se trouve.

12. Procédé selon la revendication 11, comprenant en outre la démodulation d'un canal de diffusion qui est transmis sur la porteuse à bande étroite (14) et qui inclut des informations système, sur la base de la phase déterminée du signal de référence à large bande.

13. Procédé selon la revendication 12, dans lequel les informations système incluent des informations concernant un numéro de trame système pour la porteuse à bande étroite (14), mais excluent des informations indiquant l'intervalle de fréquence entre le centre de la porteuse à bande étroite (14) et le centre de la porteuse à large bande (20) dans la bande avec, ou adjacente à, laquelle la porteuse à bande étroite (14) se trouve.

**14.** Procédé selon l'une quelconque des revendications 1 à 13, dans lequel la porteuse à bande étroite (14) est une porteuse Évolution à long terme en bande étroite (NB-LTE) ou une porteuse Internet des objets en bande étroite (NB-IoT).

**15.** Procédé selon l'une quelconque des revendications 1 à 14, dans lequel la porteuse à large bande (20) est une porteuse LTE ou une porteuse qui est issue d'une porteuse LTE.

**16.** Procédé selon l'une quelconque des revendications 1 à 15, dans lequel le récepteur à bande étroite (12) est un récepteur à conversion directe.

**17.** Procédé selon l'une quelconque des revendications 1 à 16, dans lequel la caractéristique spécifique comprend la transmission d'un ensemble d'une ou plusieurs différentes séquences de signal connues possibles, et dans lequel ladite recherche (130) parmi les différentes allocations de bande étroite possibles (16) comprend la corrélation d'un signal reçu dans une allocation avec les différentes séquences de signal connues possibles pour identifier au sein de quelle allocation de bande étroite ledit ensemble d'une ou plusieurs séquences de signal est transmis.

**18.** Procédé selon la revendication 17, dans lequel les différentes séquences de signal connues possibles comprennent une ou plusieurs séquences d'autocorrélation nulle à amplitude constante (CAZAC).

**19.** Procédé selon l'une quelconque des revendications 17 ou 18, dans lequel les différentes séquences de signal connues possibles comprennent une ou plusieurs séquences de signal de synchronisation.

**20.** Équipement utilisateur (400) comprenant un récepteur à bande étroite (12) pour rechercher parmi différentes allocations de bande étroite possibles (16) pour une porteuse à bande étroite (14) ayant une caractéristique spécifique, le récepteur à bande étroite (12) configuré pour :

   rechercher dans une grille de fréquence à large bande une partie à bande étroite (22) d'une porteuse à large bande (20) dans la bande avec, ou adjacente à, laquelle la porteuse à bande étroite (14) est autorisée à se trouver, pour obtenir un ou plusieurs points de grille à large bande candidats (18) ;
   dans lequel le récepteur à bande étroite (12) est **caractérisé en ce qu'**il est configuré en outre pour :

      prioriser une ou plusieurs des allocations de bande étroite possibles (16) sur la base de leur proximité par rapport au ou aux point(s) de grille à large bande candidat(s) (18) ;
      rechercher parmi les différentes allocations de bande étroite possibles (16) la porteuse à bande étroite (14) ayant la caractéristique spécifique, sur la base de la caractéristique spécifique et de ladite priorisation, et dans la recherche dans une grille de fréquence à large bande d'une partie à bande étroite (22) d'une porteuse à large bande (20), rechercher une partie centrale de la porteuse à large bande (20) et identifier la partie centrale de la porteuse à large bande (20) sur la base de la porteuse à large bande (20) ayant une partie nulle au niveau de son centre.

**21.** Équipement utilisateur (400) selon la revendication 20, configuré pour mettre en œuvre le procédé selon l'une quelconque des revendications 2 à 19.

**22.** Programme informatique comprenant une instruction qui, lorsqu'elle est exécutée par au moins un processeur d'un récepteur à bande étroite (12) compris dans un équipement utilisateur (400), amène le récepteur à bande étroite (12) à effectuer le procédé selon l'une quelconque des revendications 1 à 19.

**23.** Support de stockage lisible par ordinateur sur lequel est stocké le programme informatique selon la revendication 22.

Figure 1

100

Search a wideband frequency grid for a narrowband portion
of a wideband carrier that the narrowband carrier is permitted
to lie in-band with or adjacent to, to obtain one or more
candidate wideband gridpoints
110

Prioritize one or more of the possible narrowband allocations
based on their proximity to the one or more candidate
wideband gridpoints
120

Search among the different possible narrowband allocations
for the narrowband carrier having the specific characteristic,
based on the specific characteristic and said prioritizing
130

**Figure 2**

Figure 3

20

30 18

14

**Figure 4**

20

32 18

14

**Figure 5**

200

Search a wideband frequency grid for a wideband carrier that
the narrowband carrier is permitted to lie in-band with or
adjacent to, by searching the wideband frequency grid for a
narrowband center portion of such a wideband carrier
210

Search among the different possible narrowband allocations
for the narrowband carrier having the specific characteristic
220

Upon finding the wideband carrier and the narrowband
carrier with the specific characteristic, determine a phase of
a wideband reference signal transmitted on the wideband
carrier, based on a frequency distance between the center of
the narrowband carrier and the center of the wideband
carrier that the narrowband carrier is in-band with or adjacent
to
230

**Figure 6**

RADIO NODE 300

RECEIVER
PROCESSING
CIRCUIT(S)
310

MEM
340

RF RX
320

ANTENNA(S)

350

Wideband Search Module
360

Prioritizing Module
370

Narrowband Search Module
380

**Figure 7**

USER EQUIPMENT 400

PROCESSING
CIRCUITRY
410

MEM
440

RF RX
420

ANTENNA(S)

450

Figure 7A

**Wireless Device**

Receiver
12

**Base Station**

Receiver
12

**Figure 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014036820 A
- US 2013301552 A
- US 2005079870 A

**Non-patent literature cited in the description**

- NB LTE - Concept Description L1. **ERICSSON et al.** 3GPP DRAFT; RP-151397 - NB-LTE - CONCEPT DESCRIPTION L1, 3RD GENERATION PARTNERSHIP PROJECT (3GPP). MOBILE COMPETENCE CENTRE, 08 September 2015

- Handling of DC offset for NB-IoT Downlink. **INTEL CORPORATION.** 3GPP DRAFT; R1-155855 - INTEL DC_OFFSET, 3RD GENERATION PARTNERSHIP PROJECT (3GPP). MOBILE COMPETENCE CENTRE, 30 September 2015